# EUROPEAN PATENT APPLICATION

(11) **EP 4 447 175 A1**
(43) Date of publication of application: **16.10.2024**
(21) Application number: 23814656.7
(22) Date of filing: 17.02.2023
(51) Int. Cl.: H01M 10/04

(54) **ELECTRODE ASSEMBLY, BATTERY CELL, BATTERY AND ELECTRIC DEVICE**

(30) Priority: 31.05.2022 CN 202210612416
(71) Applicant: Contemporary Amperex Technology (Hong Kong) Limited, Central, Central And Western District (HK)
(72) Inventor: LEI, Yuyong, Ningde, Fujian 352100 (CN); GUO, Zhijun, Ningde, Fujian 352100 (CN); WANG, Peng, Ningde, Fujian 352100 (CN); LI, Chuan, Ningde, Fujian 352100 (CN)
(74) Representative: Holt, Lucy Rose
(86) International application number: PCT/CN2023/076891
(87) International publication number: WO 2023/231457

(57) **Abstract**

Provided in the present application are an electrode assembly, a battery cell, a battery and an electric device. The electrode assembly comprises a main body portion and at least one tab. The tab comprises a plurality of sub-tabs, which extend from one end of the main body portion and are arranged in a stacked manner; the plurality of sub-tabs are connected by means of welding to form a welded portion; and the welded portion comprises a thinned area with a thickness lower than the maximum thickness of the welded portion. The production efficiency and yield of the battery can be improved.

## Description

### CROSS REFERENCE TO RELATED APPLICATION

The application claims the priority benefits of Chinese Patent Application No. 202210612416.3 filed on May 31, 2022 and entitled "ELECTRODE ASSEMBLY, BATTERY CELL, BATTERY AND ELECTRIC DEVICE", the disclosure of which is incorporated herein by reference in its entirety.

### TECHNICAL FIELD

The application relates to the field of battery technology, and in particular to an electrode assembly, a battery cell, a battery and an electric device.

### BACKGROUND

Batteries have been widely used in consumer electronic devices, power equipment and other devices due to their good performance such as high energy density, good cycling performance and rechargeability.

The reliable connection between the components contained in the battery during the production process directly affects the production efficiency and yield of the battery. Therefore, there is an urgent need for enhancing the reliable connection between components in batteries.

### SUMMARY

The application provides an electrode assembly, a battery cell, a battery and an electric device, which can enhance production efficiency and yield of batteries.

In a first aspect, the application provides an electrode assembly including a main body and at least one electrode tab. The electrode tab includes a plurality of sub electrode tabs extending from an end of the main body and arranged in stacked layers, the plurality of sub electrode tabs are connected by welding and form a welding portion, the welding portion includes a thinned region, and a thickness of the thinned region is less than a maximum thickness of the welding portion.

In the above embodiments, the plurality of sub electrode tabs included in the electrode tab are welded to form a welding portion, and the welding portion can enhance the reliability of connection between the multiple layers of sub electrode tabs and further ensure the current conveyance capacity of the electrical connection between the electrode terminal and the electrode sheet. In addition, the welding portion includes a thinned region, and a thickness of the thinned region is less than a maximum thickness of the welding portion, which can contribute to improve the reliability of the electrical connection between the plurality of sub electrode tabs in the electrode tab and the electrode terminal, thereby enhancing the production efficiency and yield of batteries.

In some embodiments of the application, the thinned region is configured to be recessed relative to at least one surface of the welding portion and form at least one recess.

In the above embodiments, by providing the recess, it is conducive to the electrical connection between the plurality of sub electrode tabs and the electrode terminal.

In some embodiments of the application, in a thickness direction of the welding portion, a ratio between a depth of the recess and the maximum thickness of the welding portion is in a range of 0.3-0.7.

In the above embodiments, by providing the ratio between the depth of the recess and the maximum thickness of the welding portion, it is conducive to the electrical connection between the electrode tab and the electrode terminal.

In some embodiments of the application, in the thickness direction of the welding portion, a thickness of a bottom wall of the recess is less than or equal to 2mm.

In the above embodiments, by providing the thickness of the bottom wall of the recess, it is possible to further enhance the reliability of the electrical connection between the electrode tab and the electrode terminal.

In some embodiments of the application, the recess is a conformal recess, and a shape of the conformal recess is adapted to a path for electrically connecting the thinned region and an electrode terminal of a battery cell.

In the above embodiments, by providing the conformal recess, it is possible to reduce an area of the thinned region, so as to reduce heat generated during current conveyance of the electrode tab.

In some embodiments of the application, the shape of the conformal recess is strip-shaped.

In the above embodiments, on the one hand, the strip-shaped shape can facilitate the formation of an electrical connection between the conformal recess and the electrode terminal. On the other hand, the strip-shaped shape can make the thinned region have a smaller area, which can enhance the current conveyance capacity of the non-thinned region and further reduce the heat generated during current conveyance of the electrode tab. In addition, the processing difficulty of the strip-shaped shape is lower, making it easy to manufacture.

In some embodiments of the application, the shape of the conformal recess is annular.

In the above embodiments, on the one hand, the annular shape can facilitate the formation of an electrical connection between the conformal recess and the electrode terminal. On the other hand, the annular shape can enhance the reliability of the electrical connection between the thinned region and the electrode terminal of the battery cell.

In some embodiments of the application, an amount of the conformal recess is plural.

In the above embodiments, by providing the amount of the conformal recess as plural, it is possible to further enhance the reliability of the electrical connection between the thinned region and the electrode terminal of the battery cell.

In some embodiments of the application, a surface of the welding portion includes a first surface and a second surface arranged opposite in the thickness direction of the welding portion, the recess is formed on the first surface, and the second surface is used to electrically connect the electrode terminal.

In the above embodiments, the recess is formed on the first surface of the welding portion, and the second surface thereof is used to electrically connect the electrode terminal, so that the electrode tab and the electrode terminal can fit closely with each other, so as to reduce the possibility of cold joint and make the electrical connection between the electrode tab and the electrode terminal more reliable.

In some embodiments of the application, the recess is formed by stamping or pier compressing.

In the above embodiments, since the recess is formed by stamping or pier compressing, it is possible to reduce the metal particles generated during the formation of the recess, thereby reducing the occurrence of short circuit inside the battery.

In some embodiments of the application, in an extension direction of the electrode tab, a ratio between a size of the welding portion and an overall size of the electrode tab is within a range of 0.2-0.8.

In the above embodiments, by providing the ratio between the size of the welding portion and the overall size of the electrode tab within the range of 0.2-0.8, it is conducive to welding of the plurality of sub electrode tabs to form the welding portion, and is also conducive to formation of the thinned region on the welding portion to enhance the reliability of the electrical connection between the electrode tab and the electrode terminal.

In some embodiments of the application, in the extension direction of the electrode tab, a size of the welding portion is 5mm-10mm.

In the above embodiments, by providing the size of the welding portion, it is possible to enhance the reliability of welding between the plurality of electrode tabs, so as to form a stable welding portion. And it can also facilitate the formation of the thinned region on the welding portion.

In some embodiments of the application, the plurality of sub electrode tabs are subject to ultrasonic welding to form the welding portion.

In the above embodiments, the ultrasonic welding applied to the plurality of sub electrode tabs can quickly form a welding portion, and the connection between the plurality of sub electrode tabs in the welding portion is very strong.

In some embodiments of the application, the electrode tab includes a connection portion, the connection portion is connected between the main body and the welding portion, and in the connection portion, the plurality of sub electrode tabs can be arranged separated from each other.

In the above embodiments, by providing the connection portion, it is possible to facilitate bending the electrode tab so as to be stored inside housing body of the battery.

In some embodiments of the application, the electrode assembly further includes an insulation member, the welding portion further includes a non-thinned region, and the insulation member is arranged on at least one surface of the connection portion and the non-thinned region.

In the above embodiments, by providing the insulation member, it is possible to reduce the electrical connection between the electrode tab and other components, thereby reducing the occurrence of short circuit inside the battery.

In some embodiments of the application, the electrode tab includes a first electrode tab and a second electrode tab. The thinned region of the first electrode tab is configured to be electrically connected to a first electrode terminal of a battery cell. The second electrode tab has a polarity opposite to a polarity of the first electrode tab, the thinned region of the second electrode tab is configured to be electrically connected to a second electrode terminal of the battery cell with a polarity opposite to a polarity of the first electrode terminal.

In the above embodiments, the electrode tab may include a first electrode tab and a second electrode tab, and the thinned regions of the first electrode tab and the second electrode tab are respectively configured to be electrically connected to the first electrode terminal and the second electrode terminal of the battery cell, which can reduce the thickness of the electrode tab, so that the electrical connection between the electrode tab and the electrode terminal is more reliable.

In a second aspect, the application provides a battery cell including a housing, an electrode terminal and the electrode assembly in any one of the aforesaid embodiments. The electrode terminal is arranged on the housing. The electrode assembly is accommodated within the housing, and the thinned region is electrically connected to the electrode terminal.

In the above embodiments, the battery cell includes the electrode assembly in the aforesaid embodiments, so that the battery cell has a high production efficiency and yield during the production process. In addition, the main body in the electrode assembly is composed of multiple layers of positive and negative electrode sheets, and the reliability of electrical connection between the electrode tab and the electrode terminal is enhanced, so that the battery cell has a high energy density.

In some embodiments of the application, the thinned region and the electrode terminal are connected by laser welding and form a welding mark.

In the above embodiments, since the thinned region can thin the electrode tab, it is possible to reduce a risk of cold joint between the thinned region and the electrode terminal during laser welding.

In a third aspect, the application provides a battery including the battery cell in any one of the aforesaid embodiments.

In a fourth aspect, the application further provides an electric device including the battery in the aforesaid embodiments, and the battery is used to provide electrical energy.

The above description is only an overview of the technical solution of the application, which, in order to understand the technical means of the application more clearly, can be implemented according to the content of the description, and for better understanding of the above and other objects, features and advantages of the application, the detailed embodiments of the application will be set forth below.

### BRIEF DESCRIPTION OF THE DRAWINGS

By reading the detailed description of the preferable embodiments in the following, the various other advantages and benefits will become clear to a person of ordinary skill in the art. The accompanying drawings are merely intended for the purpose of illustrating preferable embodiments and are not deemed as a limitation on the application. And in all the drawings, the same reference number is used to indicate the same component. In the drawings:
Fig. 1 is a schematic structural view of a vehicle provided by some embodiments of the application;
Fig. 2 shows an explosive view of a battery provided by some embodiments of the application.
Fig. 3 shows an explosive view of a battery cell provided by some embodiments of the application;
Fig. 4 shows a schematic structural view of a battery cell provided by some embodiments of the application;
Fig. 5 shows an explosive view of a battery cell provided by some embodiments of the application;
Fig. 6 shows a sectional view of a battery cell provided by some embodiments of the application;
Fig. 7 shows a partial enlarged view at S in Fig. 6;
Fig. 8 shows a schematic structural view of an electrode assembly provided by some embodiments of the application;
Fig. 9 shows a schematic structural view of an electrode assembly provided by some embodiments of the application;
Fig. 10 shows a schematic structural view of an electrode assembly provided by some embodiments of the application;
Fig. 11 shows a schematic structural view of an electrode assembly provided by some further embodiments of the application.

The reference numbers in the detailed embodiments are as follows:
vehicle 1000;
battery 100, controller 200, motor 300;
case 10, first portion 11, second portion 12;
battery cell 20;
housing 21, end cap 211, housing body 212, insulation housing 213;
electrode terminal 22, first electrode terminal 1, second electrode terminal 2;
electrode assembly 23;
main body 231;
electrode tab 232, welding portion 2321, thinned region 2321A, recess 2321a, non-thinned region 2321B, connection portion 2322.

### DETAILED DESCRIPTION

The embodiments for the technical solution of the application will be described in detail below in combination with the drawings. The following embodiments are only intended to provide a clearer explanation of the technical solution of the application, and thus are only used as examples and cannot be used to limit the protection scope of the application.

Unless otherwise defined, all the technical and scientific terms used herein have the same meanings as commonly understood by a person skilled in the art of the application. The terms used herein are for the purpose of describing specific embodiments only and is not intended to limit the application. The terms "comprise", "have" and any variations thereof in the description and claims of the application and the above brief description of the drawings are intended to cover non-exclusive inclusions.

In the description of the embodiments of the application, the technical terms "first", "second" and the like are only intended to distinguish different objects from each other, and shall not be interpreted to indicate or imply the relative importance thereof or implicitly specify the amount, specific order or primary-secondary relation of the indicated technical features. In the description of the embodiments of the application, "a plurality of' means two or more, unless otherwise defined clearly and specifically in other ways.

Reference to "embodiment(s)" in the application means that the specific features, structures, or characteristics described in connection with the embodiment(s) may be included in at least one embodiment of the application. The presence of this phrase at various locations in the description does not necessarily refer to the same embodiment, nor is it a separate or alternative embodiment that is mutually exclusive from other embodiments. It is to be explicitly and implicitly understood by a person skilled in the art that the embodiments described herein can be combined with other embodiments.

In the description of the embodiments of the application, the term "and/or" is merely to describe an association relationship of associated objects, meaning that there may be three relationship, for example, A and/or B may mean three cases that A exists alone, A and B exist simultaneously, and B exists alone. In addition, the character "/" herein generally indicates that the related objects before and after have an "or" relationship.

In the description of the embodiments of the application, the term "a plurality of' refers to two or more (including two), and similarly, "a plurality of groups" refers to two or more groups (including two groups), and "a plurality of pieces" refers to two or more pieces (including two pieces).

In the description of the embodiments of the application, the orientation or position relationship indicated by the technical terms "center", "longitudinal", "lateral", "length", "width", "thickness", "upper", "lower", "left", "right", "vertical", "horizontal", "top", "bottom", "inside", "outside", "clockwise", "counterclockwise", "axial", "radial", "circumferential" and the like is based on the orientation or position relationship as shown in the drawings, and is only intended to describe the embodiments of the application and simplify the description, rather than indicating or implying that the noted devices or elements are necessarily of the specific orientation or structured or operated in the specific orientation, and thus, cannot be regarded as a limit of the embodiments of the application.

In the description of the embodiments of the application, except as otherwise stipulated or defined explicitly, the technical terms "mount", "link", "connect", "secure" shall be interpreted expansively. For example, it may be fixed connection, removable connection or integral connection; may be mechanical connection or electrical connection; may be direct connection or indirect connection via an intermediate medium, or may be communication inside two elements or interaction relationship between two elements. For a person of ordinary skill in the art, the specific meaning of the above terms in the embodiments of the application can be interpreted depending on the specific situation.

Batteries have been widely used in consumer electronic devices, power equipment and other devices due to their good performance such as high energy density, good cycling performance and rechargeability.

In the application, a battery refers to a single physical module including one or more battery cells to provide a higher voltage and capacity. For example, the battery mentioned in the application may include a battery module or a battery pack or the like. The battery typically includes a case for encapsulating one or more battery cell, and the case can prevent liquid or other foreign matters from affecting the charging or discharging of the battery cell.

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application.

The battery cell includes an electrode assembly and electrolyte solution, and the electrode assembly includes a positive electrode sheet, a negative electrode sheet, and a separator membrane. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting portion and a positive electrode tab connected to the positive electrode current collecting portion. The positive electrode current collecting portion is coated with the positive electrode active material layer, and the positive electrode tab is not coated with the positive electrode active material layer. Taking a lithium ion battery as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting portion and a negative electrode tab connected to the negative electrode current collecting portion. The negative electrode current collecting portion is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator membrane may be PP (polypropylene) or PE (polyethylene) and the like.

The battery cell further includes a housing for accommodating the electrode assembly and an electrode terminal arranged at the housing. Here the portions of the positive and negative electrode sheets with active materials constitute the main body of the electrode assembly, and each of the portions of the positive and negative electrode sheets without active materials constitutes an electrode tab. In order to improve the current conveyance capacity, the electrode tab includes a plurality of sub electrode tabs arranged in stacked layers. During the charging and discharging process of the battery cell, the positive electrode active material and the negative electrode active material react with the electrolyte solution, and the electrode tabs are connected to the electrode terminals to form a current circuit.

With the development of battery technology, the requirement for battery energy density is becoming higher and higher. The improvement of battery energy density may be achieved by increasing the layer amount or thickness of the positive and negative electrode sheets in the electrode assembly. In this case, the layer amount and thickness of the electrode tabs in the electrode assembly will also increase with the layer amount or thickness of the positive and negative electrode sheets.

During the production process of the battery, the electrode tabs are typically connected to the electrode terminals by welding.

However, the inventors have found that when the thickness of the electrode tabs reaches a certain thickness, the requirements for welding power and welding process are relatively high, the possibility of poor welding such as cold joint increases, the reliability of connection between multiple layers of electrode tabs decreases, and the reliability of connection between the electrode tabs and the electrode terminals decreases, thereby affecting the electrical connection between the electrode assemblies and the electrode terminals, resulting in a decrease of the production efficiency and yield of batteries.

In view of this, the embodiments of the application provide an electrode assembly, a battery cell, a battery, and an electric device, in which a plurality of sub electrode tabs included in an electrode tab are welded to form a welding portion which can enhance the reliability of connection between the multiple layers of sub electrode tabs and further ensure the current conveyance capacity of the electrical connection between the electrode terminal and the electrode sheet. In addition, the welding portion includes a thinned region, and a thickness of the thinned region is less than a maximum thickness of the welding portion, which can contribute to improve the reliability of the electrical connection between the plurality of sub electrode tabs in the electrode tab and the electrode terminal, thereby enhancing the production efficiency and yield of batteries.

The electrode assembly described in the embodiments of the application are applicable to battery cells, batteries and electric devices employing batteries.

Electric devices can include but are not limited to mobile phones, tablets, laptops, electric toys, electric tools, electric scooters, electric cars, ships, aero-spacecrafts, and so on. Among them, the electric toys may include fixed or mobile electric toys, for example, game consoles, electric car toys, electric ship toys, electric airplane toys and the like, and the aero-spacecrafts may include airplanes, rockets, space shuttles, spacecrafts and the like.

For ease of description, the following embodiments take a vehicle 100 as an example of the electric device of an embodiment for explanation.

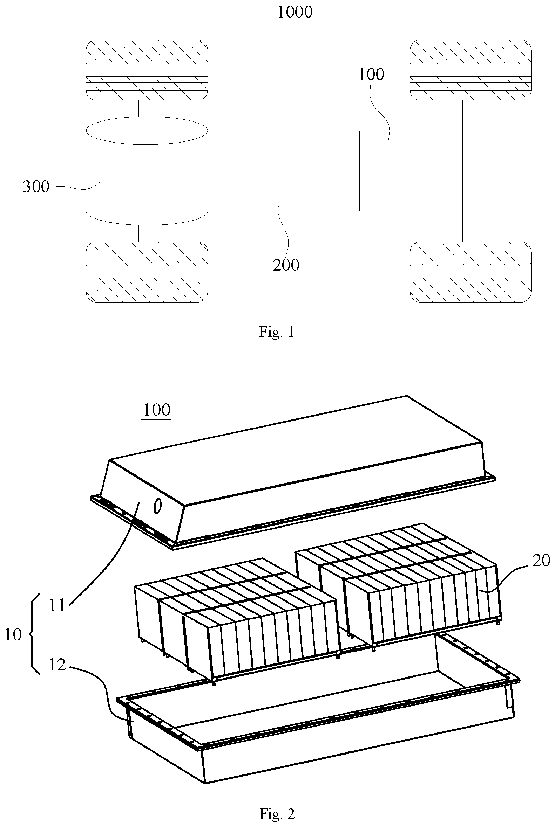

Fig. 1 is a schematic structural view of a vehicle provided by some embodiments of the application.

Referring to Fig. 1, the vehicle 1000 may be an oil automobile, a gas automobile or a new energy automobile, and the new energy automobile may be a pure electric automobile, a hybrid automobile or an extended range automobile and the like. A battery 100 is provided inside the vehicle 1000, and the battery 100 may be arranged at a bottom or a head or a rear of the vehicle 1000. The battery 100 may be used for powering the vehicle 1000. For example, the battery 100 may serve as an operational power source for the vehicle 1000. The vehicle 1000 may also include a controller 200 and a motor 300. A controller 200 is used for controlling the battery 100 to power the motor 300, for example, for operational power requirements during start-up, navigation and traveling of the vehicle 1000.

In some embodiments of the application, the battery 100 may serve not only as an operational power source for the vehicle 1000, but also as a drive power source for the vehicle 1000 to provide a drive power for the vehicle 1000 instead of or partially instead of fuel or natural gas.

Fig. 2 shows an explosive view of a battery provided by some embodiments of the application.

Referring to Fig. 2, the battery 100 includes a case 10 and a battery cell 20, and the battery cell 20 is accommodated in the case 10.

The case 10 is used to provide an accommodation space for the battery cell 20, and the case 10 may have various structures. In some embodiments, the case 10 may include a first portion 11 and a second portion 12 capped by each other. The first portion 11 and the second portion 12 together define an accommodation space for accommodating the battery cell 20. The second portion 12 may be of a hollow structure with one end open, the first portion 11 may be of a plate-like structure, and the first portion 11 caps the open side of the second portion 12 so that the first portion 11 and the second portion 12 together define the accommodation space. Also, each of the first portion 11 and the second portion 12 may be of a hollow structure with one side open, and the open side of the first portion 11 caps the open side of the second portion 12. Of course, the case 10 formed by the first portion 11 and the second portion 12 may have various shapes, such as a cylinder, a cuboid and the like.

There may be a plurality of battery cells 20 in the battery 100, and the plurality of battery cells 20 may be connected in series or in parallel or in a mixed manner. Here the mixed manner means that the plurality of battery cells 20 are connected both in series and in parallel. The plurality of battery cells 20 may be directly connected together in series or in parallel or in the mixed manner, and the entirety constituted by the plurality of battery cells 20 is accommodated inside the case 10. Of course, the battery 100 may also have a form in which the plurality of battery cells 20 are connected in series or in parallel or in the mixed manner to form battery modules at first and then a plurality of battery modules may be connected in series or in parallel or in the mixed manner to form an entirety and be accommodated inside the case 10.

Here, each battery cell 20 may be a secondary battery cell or a primary battery cell, or may also be a lithium sulfur battery, a sodium ion battery or a magnesium ion battery, but not limited thereto. The battery cell 20 may be in the form of a cylinder, a flat body, a cuboid, or other shape.

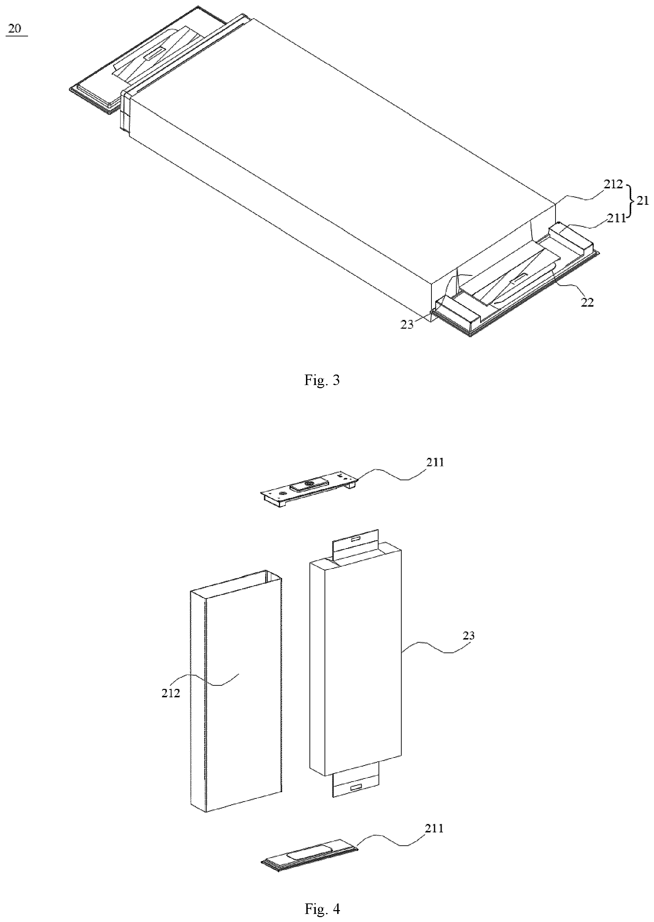

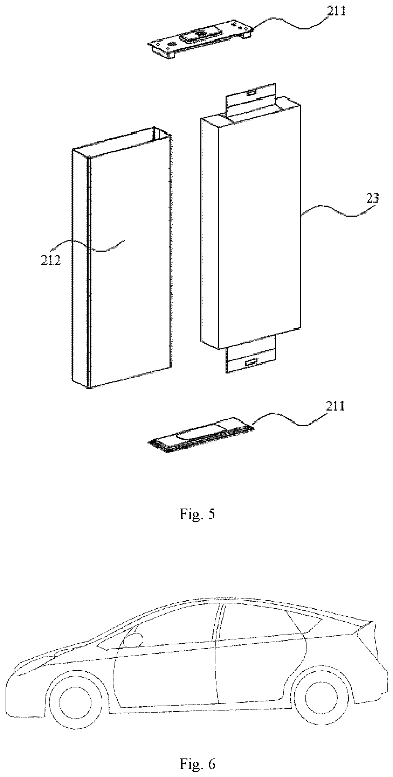

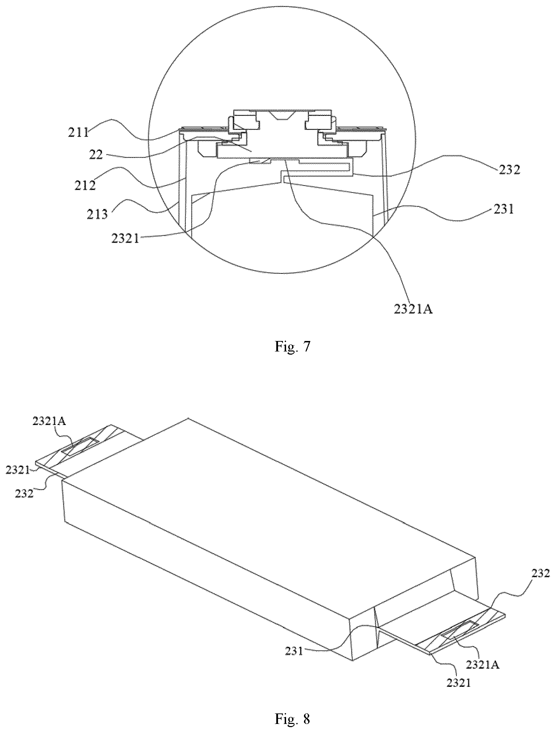

Fig. 3 shows an explosive view of a battery cell provided by some embodiments of the application. Fig. 4 shows a schematic structural view of a battery cell provided by some embodiments of the application, in which the housing body is omitted. Fig. 5 shows an explosive view of a battery cell provided by some embodiments of the application. Fig. 6 shows a sectional view of a battery cell provided by some embodiments of the application. Fig. 7 shows a partial enlarged view at S in Fig. 6.

Referring to Figs. 3 and 4, the battery cell 20 indicates the smallest unit that makes up the battery, including a housing 21, an electrode assembly 23 accommodated within the housing 21, and other functional components.

Referring to Figs. 3-7, the housing 21 includes an end cap 211 and a housing body 212. The end cap 211 can be capped to the opening of the housing body 212 to isolate the internal environment of the battery cell 20 from the external environment. Without limits, a shape of the end cap 211 may be adapted to a shape of the housing body 212 so as to fit the housing body 212. Optionally, the end cap 211 may be made of a material with a certain hardness and strength (such as aluminum alloy), so that the end cap 211 is less prone to deformation when subjected to compression and collision, enabling the battery cell 20 to have a higher structural strength and an improved safety performance. In addition, the end cap 211 may be provided with functional components such as an electrode terminal 22. The electrode terminal 22 may be used to be electrically connected to the electrode assembly 23 for inputting or outputting the electric energy of the battery cell 20.

The end cap 211 may also be of various materials, such as copper, iron, aluminum, stainless steel, aluminum alloy, plastic and the like, on which the embodiments of the application make no specific limitations.

In some embodiments of the application, an insulation member may also be provided on the inner side of the end cap 211, which can be used to isolate the electrical connection components inside the housing body 212 from the end cap 211 so as to reduce a risk of short circuit. For example, the insulation member may be made of plastic, rubber and the like.

The housing body 212 is a component used to mate with the end cap 211 so as to form an internal environment of the battery cell 20, and here the formed internal environment can be used to accommodate the electrode assembly 23, electrolyte solution and other components. The housing body 212 and the end cap 211 may be independent components, an opening may be provided in the housing body 212, and the internal environment of the battery cell 20 is formed by capping the opening with the end cap 211. Without limits, it is also possible to integrate the end cap 211 and the housing body 212. Specifically, the end cap 211 and the housing body 212 may form a common connection surface before other components enter the housing, and when it is necessary to encapsulate the interior of the housing body 212, the end cap 211 can then be capped to the housing body 212. The housing body 212 may be of various shapes such as a cuboid, a cylinder and hexagonal prisms and be of various dimensions. Specifically, the shape of the housing body 212 may be determined according to a specific shape and size of the electrode assembly 23. The housing body 212 may be of various materials, such as copper, iron, aluminum, stainless steel, aluminum alloy, plastic and the like, on which the embodiments of the application make no specific limitations.

Referring to Figs. 5 and 6, in some embodiments of the application, the housing body 212 is enclosed by an insulation housing 213 on the outside, and the insulation housing 213 can be used to isolate adjacent housing bodies 212 so as to reduce a risk of short circuit. For example, the insulation housing 213 may be made of plastic, rubber and the like.

The electrode assembly 23 is a component in the battery cell 20 that undergoes electrochemical reactions. The housing body 212 may contain one or more electrode assemblies 23. The electrode assembly 23 is mainly formed by winding or stacking the positive and negative electrode sheets, and usually there is a separator membrane between the positive and negative electrode sheets. The portions of the positive and negative electrode sheets with active materials constitute the main body 231 of the electrode assembly 23, and each of the portions of the positive and negative electrode sheets without active materials constitutes an electrode tab 232. During the charging and discharging process of the battery, the positive electrode active material and the negative electrode active material react with the electrolyte solution, and the electrode tabs 232 are connected to the electrode terminals to form a current circuit.

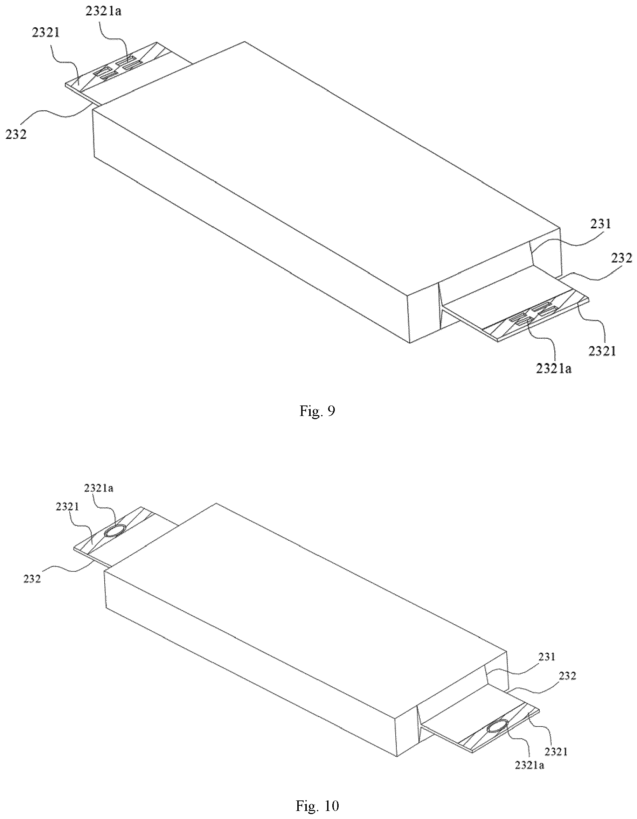

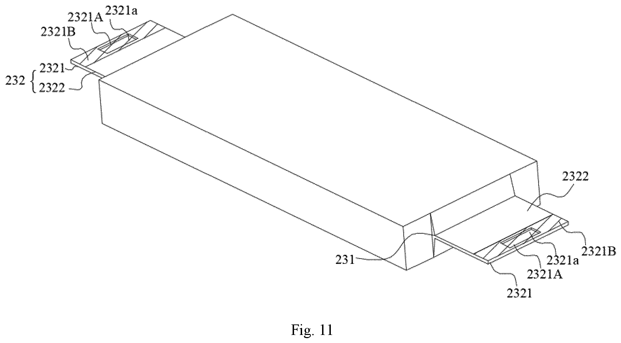

Fig. 8 shows a schematic structural view of an electrode assembly provided by some embodiments of the application. Fig. 9 shows a schematic structural view of an electrode assembly provided by some embodiments of the application. Fig. 10 shows a schematic structural view of an electrode assembly provided by some embodiments of the application. Fig. 11 shows a schematic structural view of an electrode assembly provided by some further embodiments of the application.

Referring to Fig. 8, the electrode assembly 23 of the embodiments of the application includes a main body 231 and at least one electrode tab 232. The electrode tab 232 includes a plurality of sub electrode tabs that extend from an end of the main body 231 and are arranged in stacked layers. The plurality of sub electrode tabs are connected by welding and form a welding portion 2321. The welding portion 2321 includes a thinned region 2321A, which is smaller than the maximum thickness of the welding portion 2321.

As mentioned above, the main body 231 may be formed by winding or stacking the portions of the positive and negative electrode sheets with active materials, and a separator membrane is also provided between the positive and negative electrode sheets, which can isolate the positive and negative electrode sheets and allow the ions in the electrolyte solution to pass freely between the positive and negative electrode sheets.

In the embodiments of the application, the portions of the positive and negative electrode sheets without active materials extend from an end of the main body 231 and form a plurality of sub electrode tabs arranged in stacked layers. The plurality of sub electrode tabs arranged in stacked layers are welded to form a welding portion 2321. The welding portion 2321 can enable the plurality of sub electrode tabs arranged in stacked layers to form an integrated structure, not only enhancing the connection reliability between the plurality of sub electrode tabs, but also ensuring the current conveyance capability of the electrode terminal and the electrode sheet. And it can also help enhance the reliability of connection between the electrode tab 232 and the electrode terminal 22.

The welding portion 2321 includes a thinned region 2321A. That is, a thickness of the electrode tab 232 in the thinned region 2321A is smaller than a thickness of the electrode tab 232 in other regions, which means that the thinned region 2321A is less than the maximum thickness of the welding portion 2321. Therefore, in the embodiments of the application, the thinned region 2321A is configured to be electrically connected to the electrode terminal 22 of the battery cell 20. Due to the reduced thickness of the thinned region 2321A, the reliability of electrical connection between it and the electrode terminal 22 is enhanced.

In the above embodiments, the plurality of sub electrode tabs included in the electrode tab 232 are welded to form the welding portion 2321, and the welding portion 2321 can enhance the reliability of connection between the multiple layers of sub electrode tabs. Moreover, the thinned region 2321A included in the welding portion 2321 can reduce the thickness of some of the welding portions 2321, which can help improve the reliability of the electrical connection between multiple sub electrode tabs in the electrode tab 232 and the electrode terminal 22, thereby improving the production efficiency and yield of the battery.

Referring to Figs. 9 and 10, in some embodiments of the application, the thinned region 2321A is configured to be recessed relative to at least one surface of the welding portion 2321 and form at least one recess 2321a.

In the above embodiments, by providing the recess 2321a, the thickness between the electrode tab 232 and the electrode terminal 22 is reduced, so that the difficulty of electrical connection therebetween is reduced so as to facilitate the electrical connection between the electrode tab 232 and the electrode terminal 22. Moreover, the recess 2321a can reduce the protruding height of the electrical connection portion 2322 between the electrode tab 232 and the electrode terminal 22, thereby facilitating the subsequent bending of the electrode tab 232 and storage into the housing body 212 of the battery cell 20.

In some specific embodiments of the application, the thinned region 2321A may be configured to be recessed relative to one surface of the welding portion 2321 and form one or more recess 2321a.

In some other specific embodiments of the application, the thinned region 2321A may be configured to be recessed relative to the two opposite surfaces of the welding portion 2321 and form one or more recess 2321a respectively.

In some embodiments of the application, in a thickness direction of the welding portion 2321, a ratio between a depth of the recess 2321a and the maximum thickness of the welding portion 2321 is in a range of 0.3-0.7.

In the above embodiments, the depth of the recess 2321a may be understood as a total thickness difference between the non-thinned region 2321B and the thinned region 2321A of the welding portion 2321. The ratio between the depth of the recess 2321a and the maximum thickness of the welding portion 2321 is not only conducive to the electrical connection between the electrode tab 232 and the electrode terminal 22, but also enables a higher strength after the recess 2321a is electrically connected to the electrode terminal 22.

For example, the ratio between the depth of the recess 2321a and the maximum thickness of the welding portion 2321 may be, but is not limited to, 0.3, 0.4, 0.5, 0.6, 0.7.

For further example, if the maximum thickness of the welding portion 2321 is 6mm, the depth of the recess 2321a may be any value between 4mm-4.2mm, such as 4mm, 4.01mm and the like. If the maximum thickness of the welding portion 2321 is 5mm, the depth of the recess 2321a may be any value between 3mm-3.5mm, such as 3mm, 3.01mm, 3.02mm and the like.

In some embodiments of the application, in the thickness direction of the welding portion 2321, a thickness of a bottom wall of the recess 2321a is less than or equal to 2mm.

In the above embodiments, the thickness of the bottom wall of the recess 2321a may be understood as the thickness of the thinned region 2321A. The thickness of the thinned region 2321A is set within the above range, which can further enhance the reliability of electrical connection between the electrode tab 232 and the electrode terminal 22.

For example, the thickness of the bottom wall of the recess 2321a may be, but is not limited to, 2mm, 1.8mm, 1.5mm.

In some embodiments of the application, the recess 2321a is a conformal recess, and a shape of the conformal recess is adapted to a path for electrically connecting the thinned region 2321A and the electrode terminal 22.

For example, the thinned region 2321A and the electrode terminal 22 may form an electrical connection by welding. Therefore, the welding path may be understood as the electrical connection path between the thinned region 2321A and the electrode terminal 22.

In the above embodiments, a conformal recess is formed according to the shape of the electrical connection portion 2322 of the electrode terminal 22, which is adapted to its shape. The conformal recess can reduce the area of the thinned region 2321A, enabling good current conveyance capacity of the non-thinned region 2321B, thereby effectively reducing the heat generated by the electrode tab 232 during current conveyance.

Referring to Figs. 9 and 10, in some embodiments of the application, the shape of the conformal recess is strip-shaped.

In the above embodiments, on the one hand, the strip-shaped shape facilitates the electrical connection between the conformal recess and the electrode terminal 22. On the other hand, the strip-shaped shape can make the thinned region 2321A have a smaller area, which can enhance the current conveyance capacity of the non-thinned region 2321B and further reduce the heat generated during current conveyance of the electrode tab 232. In addition, the processing difficulty of the strip-shaped shape is lower, facilitating manufacture.

In some embodiments of the application, the shape of the conformal recess is annular.

In the above embodiments, on the one hand, the annular shape can facilitate the electrical connection between the conformal recess and the electrode terminal 22. On the other hand, the annular shape can enhance the reliability of electrical connection between the thinned region 2321A and the electrode terminal 22.

In some embodiments of the application, an amount of the conformal recess is plural.

In the above embodiments, by providing the amount of the conformal recess as plural, it is possible to further enhance the reliability of electrical connection between the thinned region 2321A and the electrode terminal 22.

In some other embodiments of the application, the shape of the conformal recess may also be other shapes, such as square, circular and the like.

In some embodiments of the application, a surface of the welding portion 2321 includes a first surface and a second surface arranged opposite in the thickness direction of the welding portion 2321, the recess 2321a is formed on the first surface, and the second surface is used to electrically connect the electrode terminal 22.

In the above embodiments, the recess 2321a is formed on the first surface of the welding portion 2321, and the second surface of the welding portion 2321 is used to electrically connect the electrode terminal 22, so that the electrode tab 232 and the electrode terminal 22 can fit closely with each other, so as to reduce the possibility of cold joint and make the electrical connection between the electrode tab 232 and the electrode terminal 22 more reliable.

In some other embodiments of the application, the recess 2321a may be formed on the second surface of the welding portion 2321, and the second surface may be used to electrically connect the electrode terminal 22. Specifically, the recess 2321a may be filled with conductive adhesive and connected to the electrode terminal 22 through the conductive adhesive.

In some embodiments of the application, the recess 2321a is formed by stamping or pier compressing.

In the above embodiments, since the recess 2321a is formed by stamping or pier compressing, it is possible to reduce the metal particles generated during the formation of the recess 2321, thereby reducing the occurrence of short circuit inside the battery.

In some other embodiments of the application, the recess 2321a may also be formed by other processes, such as cutting, grinding and the like.

In some embodiments of the application, in an extension direction of the electrode tab 232, a ratio between a size of the welding portion 2321 and an overall size of the electrode tab 232 is within a range of 0.2-0.8.

In the above embodiments, in the extension direction of the electrode tab 232, the overall size of the electrode tab 232 is the overall size of the electrode tab 232 extending from the main body 231. By providing the ratio between the size of the welding portion 2321 and the overall size of the electrode tab 232, it is conducive to welding of the plurality of sub electrode tabs to form the welding portion 2321, and is also conducive to formation of the thinned region 2321A on the welding portion 2321 to enhance the reliability of electrical connection between the electrode tab 232 and the electrode terminal 22.

For example, the ratio between the size of the welding portion 2321 and the overall size of the electrode tab 232 may be, but is not limited to, 0.2, 0.3, 0.4, 0.5, 0.6, 0.7, 0.8.

In some embodiments of the application, the overall size of the electrode tab 232 is 20mm-25mm, and the overall size is set within the above range, which can facilitate the storage of the electrode tab 232 into the housing body 212 of the battery cell 20.

Based on the above embodiments, the size of the welding portion 2321 may be any value in 5mm-16mm, such as 5mm, 6mm, 7mm, 8mm, 9mm, 10mm, 11mm, 12mm, 13mm, 14mm, 15mm, 16mm.

In some embodiments of the application, in the extension direction of the electrode tab 232, the size of the welding portion 2321 is 5mm-10mm.

In the above embodiments, by providing the size of the welding portion 2321, it is possible to enhance the reliability of welding between the plurality of electrode tabs 232, so as to form a stable welding portion 2321. And it can also facilitate the formation of the thinned region 2321Aon the welding portion 2321.

For example, the size of welding portion 2321 may be, but is not limited to, 5mm, 6mm, 7mm, 8mm, 9mm, 10mm.

In some embodiments of the application, the plurality of sub electrode tabs are subject to ultrasonic welding to form the welding portion 2321.

In the above embodiments, the ultrasonic welding applied to the plurality of sub electrode tabs can quickly form the welding portion 2321, and the ultrasonic welding applied to the plurality of sub electrode tabs in the welding portion 2321 can make the connection between the sub electrode tabs stronger.

In some other embodiments of the application, the plurality of sub electrode tabs may also be welded to form the welding portion 2321 through in other ways, such as laser welding, resistance welding and the like.

Referring to Fig. 11, in some embodiments of the application, the electrode tab 232 includes a connection portion 2322, the connection portion 2322 is connected between the main body 231 and the welding portion 2321, and in the connection portion 2322, the plurality of sub electrode tabs can be arranged separated from each other.

In the above embodiments, by providing the connection portion 2322, it is possible to facilitate bending the electrode tab 232 and storing it inside the battery.

In some embodiments of the application, the thinned region 2321A extends out from the welding portion 2321, so that some regions in the thinned region 2321A overlap with the welding portion 2321. For example, the thinned region 2321A may extend from the welding portion 2321 to the connection portion 2322, which can facilitate the bending the electrode tab 232 and storing it inside the housing body 212 of the battery cell 20.

Still referring to Fig. 11, in some embodiments of the application, the electrode assembly 23 further includes an insulation member (not shown in the figure), the welding portion 2321 further includes a non-thinned region 2321B, and the insulation member is arranged on at least one surface of the connection portion 2322 and the non-thinned region 2321B.

In the above embodiments, the insulation member can be used to isolate the electrode tab 232 from other electrical connection components, so as to reduce the risk of short circuit.

For example, the insulation member may be made of plastic, rubber such as insulation blue glue, and the like.

In some embodiments of the application, the insulation member may be arranged on two surfaces of the connection portion 2322 and the non-thinned region 2321B arranged opposite to each other, or may also be arranged on one surface of the connection portion 2322 and the non-thinned region 2321B.

In some specific embodiments of the application, the insulation member is arranged on one surface of the connection portion 2322 and the non-thinned region 2321B. Here the surface in the connection portion 2322 provided with the insulation member is the surface facing towards the main body 231 after the electrode tab 232 is stored in the housing body 212 of the battery cell 20, and the surface of the non-thinned region 2321B provided with the insulation member is the surface away from the surface on which the thinned region 2321Ais located.

In some embodiments of the application, the electrode tab 232 includes a first electrode tab and a second electrode tab. The thinned region 2321A of the first electrode tab is configured to be electrically connected to a first electrode terminal of the battery cell 20. The second electrode tab has a polarity opposite to a polarity of the first electrode tab, the thinned region 2321A of the second electrode tab is configured to be electrically connected to a second electrode terminal of the battery cell 20 with a polarity opposite to a polarity of the first electrode terminal.

In the above embodiments, the electrode tab 232 may include a first electrode tab and a second electrode tab, and the thinned regions 2321A of the first electrode tab and the second electrode tab are respectively configured to be electrically connected to the first electrode terminal and the second electrode terminal of the battery cell 20, which can reduce the thickness of the electrode tab 232, so that the electrical connection between the electrode tabs 232 and the electrode terminals 22 is more reliable.

For example, the first electrode tab may be a negative electrode tab, and then the first electrode terminal is a positive electrode terminal, the second electrode tab is a positive electrode tab, and the second electrode terminal is a negative electrode terminal.

In some embodiments of the application, the first electrode tab and the second electrode tab may extend out from the same side of the body portion 231, or may also extend out from two opposite sides respectively.

In some specific embodiments of the application, the first and second electrode tabs extend out from two opposite sides of the main body 231 respectively, which can help evenly distribute the operating temperature of the battery.

Furthermore, the first and second electrode tabs extend diagonally from two opposite sides of the main body 231, which not only helps evenly distribute the operating temperature of the battery, but also helps reduce the operating temperature of the battery.

Referring to Figs. 4-7, according to some embodiments of the application, the application further provides a battery cell 20 including a housing 21, an electrode terminal 22 and the electrode assembly 23 in any one of the aforesaid embodiments. The electrode terminal 22 is arranged on the housing 21. The electrode assembly 23 is accommodated within the housing 21, and the thinned region 2321A is electrically connected to the electrode terminal 22.

In the above embodiments, the battery cell 20 includes the electrode assembly 23 in the aforesaid embodiments, so that the battery cell 20 has a high production efficiency and yield during the production process. In addition, the main body 231 in the electrode assembly 23 is composed of multiple layers of positive and negative electrode sheets, and the reliability of electrical connection between the electrode tab 232 and the electrode terminal 23 is enhanced, so that the battery cell 20 has a high energy density.

In some embodiments of the application, the thinned region 2321A and the electrode terminal 22 are connected by laser welding and form a welding mark.

In the above embodiments, since the thinned region 2321A can thin the electrode tab 232, it is possible to reduce a risk of cold joint between the thinned region 2321A and the electrode terminal 22 during laser welding. In addition, the position arrangement of the welding mark can reduce the generation of metal particles between the electrode tab 232 and the electrode terminal 22, thereby reducing the occurrence of short circuit inside the battery.

According to some embodiments of the application, the application further provides a battery including the battery cell according to any of the above embodiments.

In the above embodiments, due to the inclusion of the battery cell in any of the above embodiments, the battery thereby has a high capacity density.

According to some embodiments of the application, the application further provides an electric device including the battery according to the aforesaid embodiments used to provide electrical energy.

In some embodiments of the application, the electrode assembly 23 includes a body portion 231 and at least one electrode tab 232. The electrode tab 232 includes a plurality of sub electrode tabs extending from an end of the main body 231 and arranged in stacked layers. The plurality of sub electrode tabs are welded to form a welding portion 2321, the welding portion 2321 includes a thinned region 2321A. The thinned region 2321A is configured to be recessed relative to a surface of the welding portion 2321 and form at least one recess 2321a, and the recess 2321a is used to electrically connect an electrode terminal 22. The recess 2321a can effectively reduce the thickness of a part of the electrode tab 232, making the electrical connection between it and the electrode terminal 22 more reliable.

The following provides a detailed description of laser welding between the thinned region of the electrode tab and the electrode terminal by specific embodiments.

### Embodiment 1

The negative electrode tab is connected to the first electrode terminal by laser welding and form a welding mark. Here the power for laser welding is 4000W, the material of the negative electrode tab is copper, and the thickness of the thinned region of the negative electrode tab is 0.4mm.

### Embodiment 2

The difference from Embodiment 1 is that the thickness of the thinned region is 0.6mm.

### Embodiment 3

The difference from Embodiment 1 is that the thickness of the thinned region is 0.8mm.

### Embodiment 4

The difference from Embodiment 1 is that the thickness of the thinned region is 1.0mm.

### Embodiment 5

The difference from Embodiment 1 is that the thickness of the thinned region is 1.2mm.

### Embodiment 6

The positive electrode tab is connected to the second electrode terminal by laser welding and form a welding mark. Here the power for laser welding is 2500W, the material of the positive electrode tab is aluminium, and the thickness of the thinned region of the positive electrode tab is 0.6mm.

### Embodiment 7

The difference from Embodiment 6 is that the thickness of the thinned region is 0.8mm.

### Embodiment 8

The difference from Embodiment 6 is that the thickness of the thinned region is 1.0mm.

### Embodiment 9

The difference from Embodiment 6 is that the thickness of the thinned region is 1.2mm.

### Embodiment 10

The difference from Embodiment 6 is that the thickness of the thinned region is 1.4mm.

The appearances of the welding marks formed in Embodiments 1-10 are observed, and the results are shown in Table 1.

**Table 1**

| Embodiments | Electrode tab | Thickness of thinned region | Welding situation |
|---|---|---|---|
| Embodiment 1 | Negative electrode tab | 0.4mm | No cold joint |
| Embodiment 2 | Negative electrode tab | 0.6mm | No cold joint |
| Embodiment 3 | Negative electrode tab | 0.8mm | No cold joint |
| Embodiment 4 | Negative electrode tab | 1.0mm | Local cold joint |
| Embodiment 5 | Negative electrode tab | 1.2mm | Cold joint |
| Embodiment 6 | Positive electrode tab | 0.6mm | No cold joint |
| Embodiment 7 | Positive electrode tab | 0.8mm | No cold joint |
| Embodiment 8 | Positive electrode tab | 1.0mm | No cold joint |
| Embodiment 9 | Positive electrode tab | 1.2mm | Local cold joint |
| Embodiment 10 | Positive electrode tab | 1.4mm | Cold joint |

It can be seen in Table 1 that the thinned region can thin the electrode tab, so that it is possible to reduce the risk of cold joint between the thinned region and the electrode terminal during laser welding.

At last, it should be appreciated that the above embodiments are only used to illustrate the technical solution of the application but not to limit the same. Although the application is described in detail with reference to the above embodiments, a person of ordinary skill in the art is to understand that it is still possible to modify the technical solution described in the above embodiments or equivalently replace some or all of the technical features thereof. The modifications and replacements shall not render the substance of the corresponding technical solution deviate from the spirit and scope of the technical solution in the various embodiments of the application, all of which are to be covered by the scope of the claims and description of the application. In particular, the various technical features mentioned in various embodiments can be combined in any way. The application is not limited to the specific embodiments disclosed herein, but includes all the technical solutions which fall into the scope of the claims.

## Claims

1. An electrode assembly comprising:
a main body;
at least one electrode tab, comprising a plurality of sub electrode tabs extending from an end of the main body and arranged in stacked layers, the plurality of sub electrode tabs being connected by welding and forming a welding portion, the welding portion comprising a thinned region, a thickness of the thinned region being less than a maximum thickness of the welding portion.

2. The electrode assembly according to claim 1, wherein the thinned region is configured to be recessed relative to at least one surface of the welding portion and form at least one recess.

3. The electrode assembly according to claim 2, wherein in a thickness direction of the welding portion, a ratio between a depth of the recess and the maximum thickness of the welding portion is in a range of 0.3-0.7.

4. The electrode assembly according to claim 2 or 3, wherein in the thickness direction of the welding portion, a thickness of a bottom wall of the recess is less than or equal to 2mm.

5. The electrode assembly according to any of claims 2-4, wherein the recess is a conformal recess, and a shape of the conformal recess is adapted to a path for electrically connecting the thinned region and an electrode terminal of a battery cell.

6. The electrode assembly according to claim 5, wherein the shape of the conformal recess is annular.

7. The electrode assembly according to claim 5, wherein the shape of the conformal recess is strip-shaped.

8. The electrode assembly according to any of claims 5-7, wherein an amount of the conformal recess is plural.

9. The electrode assembly according to any of claims 2-8, wherein a surface of the welding portion comprises a first surface and a second surface arranged opposite in the thickness direction of the welding portion, the recess is formed on the first surface, and the second surface is used to electrically connect the electrode terminal.

10. The electrode assembly according to any of claims 2-9, wherein the recess is formed by stamping or pier compressing.

11. The electrode assembly according to any of claims 1-10, wherein in an extension direction of the electrode tab, a ratio between a size of the welding portion and an overall size of the electrode tab is within a range of 0.2-0.8.

12. The electrode assembly according to any of claims 1-11, wherein in the extension direction of the electrode tab, a size of the welding portion is 5mm-10mm.

13. The electrode assembly according to any of claims 1-12, wherein the plurality of sub electrode tabs are subject to ultrasonic welding to form the welding portion.

14. The electrode assembly according to any of claims 1-13, wherein the electrode tab comprises a connection portion, the connection portion is connected between the main body and the welding portion, and in the connection portion, the plurality of sub electrode tabs can be arranged separated from each other.

15. The electrode assembly according to claim 14, wherein the electrode assembly further comprises an insulation member, the welding portion further comprises a non-thinned region, and the insulation member is arranged on at least one surface of the connection portion and the non-thinned region.

16. The electrode assembly according to any of claims 1-15, wherein at least one electrode tab comprises:
a first electrode tab, the thinned region of the first electrode tab being configured to be electrically connected to a first electrode terminal of a battery cell;
a second electrode tab with a polarity opposite to a polarity of the first electrode tab, the thinned region of the second electrode tab being configured to be electrically connected to a second electrode terminal of the battery cell with a polarity opposite to a polarity of the first electrode terminal.

17. A battery cell, comprising:
a housing;
an electrode terminal arranged on the housing;
the electrode assembly according to any of claims 1 to 16, accommodated within the housing, the thinned region being electrically connected to the electrode terminal.

18. The battery cell according to claim 17, wherein the thinned region and the electrode terminal are connected by laser welding and form a welding mark.

19. A battery, comprising the battery cell according to claim 17 or 18.

20. An electric device, comprising the battery according to claim 19 used to provide electrical energy.
